# EUROPÄISCHE PATENTSCHRIFT

(11) **EP 0 376 093 B1**
(45) Veröffentlichungstag und Bekanntmachung des Hinweises auf die Patenterteilung: **01.09.1993**
(21) Anmeldenummer: 89123236.5
(22) Anmeldetag: 15.12.1989
(51) Int. Cl.: G01L 1/14, G01L 5/13

(54) **Kraftsensor zur Bestimmung von Zug- und Druckkräften**
Force transducer for measuring tension and compression forces
Capteur de force pour mesurer des forces de tension et de compression

(30) Priorität: 24.12.1988 DE 3843869
(43) Veröffentlichungstag der Anmeldung: 04.07.1990
(73) Patentinhaber: DEERE & COMPANY, Moline, Illinois 61265 (US)
(72) Erfinder: Becker, Manfred, Dipl.-Ing., D-6710 Frankenthal (DE)
(74) Vertreter: Feldmann, Bernhard

(56) Entgegenhaltungen:
- EP-A- 0 199 067
- DE-A- 2 417 055
- DE-A- 3 110 107
- DE-A- 3 343 895
- DE-A- 3 515 126

## Beschreibung

Die Erfindung betrifft einen Kraftsensor zur Bestimmung von Zug- und Druckkräften mit einem hohlen, auf Biegung beanspruchbaren Biegekörper, dessen erster Endbereich festlegbar ist und in dessen zweiten, freien Endbereich senkrecht zur Längsachse des Biegekörpers die zu bestimmende Kraft einleitbar ist, und mit einem mit dem Biegekörper in dessen zweiten Endbereich starr verbundenen, sich frei in das Innere des Biegekörpers erstreckenden Meßstabes, der an seinem freien Ende wenigstens ein Geberelement trägt, welchem wenigstens ein ortsfest angeordnetes Nehmerelement gegenüberliegt.

Ein derartiger Kraftsensor ist durch die DE-A-35 15 126 bekanntgeworden. Bei Einleitung einer Kraft verbiegt sich der Biegekörper. Hierbei neigt sich seine im Bereich der Krafteinleitung liegende Achse gegenüber dem unbelasteten Zustand um einen von der Kraft abhängigen Neigungswinkel. Da in diesem Bereich der ansonsten freie, von Zug- oder Druckkräften unbeeinflußte Meßstab mit dem Biegekörper verbunden ist, neigt sich der Meßstab um den gleichen Neigungswinkel, so daß sein freies, nicht auf Biegung beanspruchtes Ende eine neue Position einnimmt.

Damit verändert sich die relative Lage zwischen Geber- und Nehmerelement, was als Meßsignal erfaßt werden kann. Dieses Meßsignal stellt ein Maß für die Durchbiegung des Biegekörpers und damit der Größe der eingeleiteten Kraft dar.

Die Auslegung des Biegekörpers muß so getroffen werden, daß er die maximal zu übertragende Kraft elastisch aufnehmen kann, d.h., daß er sich bei Belastung nicht bleibend verformt. Ferner muß bei der Auslegung das große Biegemoment an der Einspannstelle und die in der Aufnahme auftretende Flächenpressung berücksichtigt werden.

Bei einer Reihe von Anwendungen sind neben statischen auch dynamische Lasten zu berücksichtigen. Dies ist beispielsweise bei einer Anwendung bei Ackerschleppern, die im Einsatz ein Bodenbearbeitungsgerät über das Feld ziehen, gegeben. Hier kann die Zugkraft zwischen Schlepper und Bodenbearbeitungsgerät durch Kraftsensoren gemessen werden, wobei die Meßwerte einer Hubarmsteuerung zum Anheben oder Absenken des Bodenbearbeitungsgerätes zugeführt werden. Die Belastungen eines Kraftsensors können hier durch Bodenunebenheiten, Steine und dergleichen, starken Schwankungen unterliegen, was zu Erschütterungen und Vibrationen führt.

Um große Kräfte übertragen zu können, ist es vorteilhaft, den Biegekörper möglichst kurz auszubilden. Ferner ist auch eine Verlängerung des Meßstabes, die zu einem größeren Meßsignal führen könnte, nur in begrenztem Umfang durchführbar, da dessen Durchbiegung durch sein Eigengewicht gepaart mit einer abgesenkten Eigenfrequenz einer reproduzierbaren Messung entgegensteht. So würde ein solchermaßen verlängerter Stab schon bei geringsten Erschütterungen zu Eigenschwingungen angeregt, deren Auslenkungen die Größe des zu erwartenden Meßausschlages bei weitem übertreffen.

Das Erfordernis kurzer Biegekörper und Meßstäbe führt dazu, daß die Auslenkung des freien Endes des Meßstabes aus der Ruhelage und damit auch das Meßsignal relativ unempfindlich auf eingeleitete Kräfte reagieren.

Die der Erfindung zugrunde liegende Aufgabe wird darin gesehen, einen Kraftsensor zur Bestimmung von Zug- und Druckkräften der eingangs genannten Art mit verbesserter Empfindlichkeit zu schaffen und für einen rauhen Einsatz, wie er beispielsweise bei Ackerschleppern gegeben ist, nutzbar zu machen.

Die Aufgabe wird erfindungsgemäß dadurch gelöst, daß der Biegekörper so ausgelegt ist, daß seine Biegesteifigkeit in seinem Bereich der Krafteinleitung relativ gering ist und zur Seite des festgelegten Bereiches hin zunimmt. Im Bereich der Krafteinleitung wird der Biegekörper z.B. so ausgelegt, daß er bei maximaler Belastung die höchst zulässige Krümmung erreicht, während seine Krümmung im Bereich der Einspannstelle sehr klein ist.

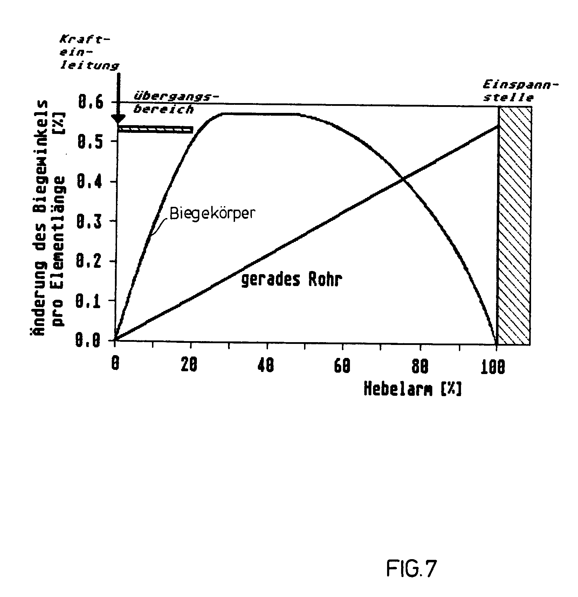

Dieser Lösung liegt die Überlegung zugrunde, daß bei einem auf Biegung beanspruchten Körper mit über seine Länge gleichbleibendem Querschnitt die Krümmung über die gesamte Länge stetig zunimmt (siehe Fig. 7: gerades Rohr). Dabei wird die Biegekörperachse im Bereich des Krafteinleitpunktes um einen bestimmten Winkel aus ihrer Ruhelage geneigt. Dieser Neigungswinkel teilt sich dem Meßstab mit, welcher keinen Biegekräften ausgesetzt ist. Darüberhinaus wird der Meßstab aufgrund der Auslenkung des Biegekörpers translatorisch, quer zur Biegekörperachse in Kraftrichtung verschoben. Die Lageveränderungen aufgrund des Neigungswinkels und der translatorischen Verschiebung teilen sich dem freien Ende des Meßstabes mit, der infolgedessen eine neue Lage einnehmen kann. Allerdings hat sich herausgestellt, daß die beiden genannten Ursachen für die Lageänderung sich an dem freien Ende des Meßstabes gegenläufig auswirken, so daß eine Verschiebung des freien Endes aufgrund der Neigung wenigstens teilweise wieder durch die translatorische Verschiebung aufgehoben wird, was die Empfindlichkeit des Kraftsensors beeinträchtigt. Dieser Kompensationseffekt wirkt sich bei kurzen Biegekörpern besonders stark aus.

Die erfindungsgemäße Lösung begünstigt eine Verbiegung des Biegekörpers gerade in dem Bereich, in dem der Meßstab im Biegekörper gelagert ist, während der übrige Biegekörper relativ starr ist. Damit kann bei Krafteinleitung der Meßstab einen relativ großen Neigungswinkel einnehmen, die translatorische Auslenkung ist jedoch relativ gering und vermag die Lageänderung des freien Endes des Meßstabes nicht wesentlich zu beeinträchtigen. Das wesentliche Merkmal der Erfindung ist darin zu sehen, einen möglichst geringen Neigungswinkel des Biegekörpers an seiner Einspannstelle und einen möglichst großen Neigungswinkel an der Stelle der Krafteinleitung zu erzielen. Hierdurch kann der Kraftsensor bei Beibehaltung einer hohen Empfindlichkeit relativ kurz ausgebildet werden. Er ist damit weitgehend störunanfällig hinsichtlich im rauhen Betrieb auftretender Störungen.

Vorzugsweise ist der Meßstab an der Krafteinleitungsstelle eingespannt. Als Krafteinleitungsstelle wird hier der Ort bezeichnet, an dem die Wirkungslinie der Kraft die Biegekörperachse schneidet. Von diesem Ort aus erstreckt sich der Meßstab frei in das Innere des Biegekörpers. Die Ausnehmung im Biegekörper muß groß genug sein, um ein Anstoßen des Meßstabes an den Wandungen der Ausnehmung auszuschließen.

Eine vorteilhafte Ausbildung wird darin gesehen, daß der Querschnitt des Biegekörpers vom Bereich der Krafteinleitung zum Bereich der Festlegung zunimmt. Der Biegekörper kann z.B. in seinem mittleren Bereich im wesentlichen kegelförmig verlaufen. Diese Form läßt sich preiswert herstellen und weist einen günstigen Verlauf der Biegesteifigkeit längs der Biegekörperachse auf.

Einer besonders bevorzugten Weiterbildung der Erfindung zufolge weist der Biegekörper in seinem mittleren Bereich ein Profil mit zwei Vorzugsrichtungen unterschiedlicher Dicke des Biegekörpers auf. Der Biegekörper hat vorzugsweise einen im wesentlichen rechteckigen Querschnitt mit zwei sich gegenüberliegenden schmalen und zwei sich gegenüberliegenden breiten Seiten. Hierdurch wird erreicht, daß der Biegekörper sich bevorzugt nur in einer Ebene verbiegen läßt, so daß auf den Biegekörper einwirkende Kräfte, die sich nicht auf das Meßsignal auswirken sollen, durch die Form des Biegekörpers unterdrückt (ausgefiltert) werden. Dies ist besonders bei einer Unterlenkerregelung eines landwirtschaftlichen Schleppers von Vorteil, da lediglich die Zugkräfte bei der Regelung berücksichtigt werden sollen, nicht jedoch vertikale Kräfte, die auf Gerätegewichte und dergleichen zurückgehen. Bei dieser Anwendung ist es beispielsweise zweckmäßig, den mittleren Bereich des Biegekörpers in seiner vertikalen Ausdehnung rechteckförmig und in seiner horizontalen Ausdehnung kegelförmig auszubilden.

Insbesondere Übergänge zwischen zylindrischen und rechteckigen Querschnitten neigen zur Ausbildung erhöhter Spannungsspitzen. Zur optimalen Ausnutzung der Durchbiegung ist es deshalb vorteilhaft, wenn wenigstens im auf Biegung beanspruchten Bereich des Biegekörpers alle Übergänge zwischen unterschiedlichen Profilen abgerundet ausgeführt sind. Kerbwirkungen, die bei der biegeschwachen Ausbildung im Bereich der Krafteinleitung auftreten können und die Festigkeit beeinträchtigen, können hierdurch vermieden werden.

Zur Montage des Biegekörpers an eine Vorrichtung, z.B. Fahrzeugchassis, in das die Kraft eingeleitet werden soll, trägt der festlegbare Endbereich des Biegekörpers vorzugsweise einen sich quer zur Biegekörperachse erstreckenden Flansch, der ein solides Widerlager zur Krafteinleitung darstellt. Dieser Flansch kann parallel zur Biegekörperachse ausgerichtete Bohrungen oder Ausnehmungen aufweisen, durch die Befestigungsschrauben geführt werden.

In bevorzugter Weise trägt der Biegekörper jenseits des Flansches, also auf der seinem auf Biegung beanspruchten Teil gegenüberliegenden Seite, einen Schaft, welcher Befestigungsmittel zur Aufnahme des Nehmerelementes enthält. Durch diese Verlängerung des Schaftes kann auch der Meßstab verlängert ausgeführt werden, so daß sein freies Ende bei gleicher Krafteinwirkung stärker ausgelenkt wird. Der Verlängerung sind jedoch durch die eingangs genannten Eigenfrequenzstörungen Grenzen gesetzt.

Einer bevorzugten Weiterbildung der Erfindung zufolge ist der Biegekörper im Bereich der Krafteinleitung zylindrisch ausgebildet. Die Zylinderfläche nimmt ein um die Biegekörperachse verdrehbares Aufnahmeteil mit sphärischer Oberfläche auf, auf dem ein der Krafteinleitung dienendes Koppelglied schwenkbar gelagert ist. Die Anbringung eines Aufnahmeteiles an dem Biegekörper, auf dem das Koppelglied schwenkbeweglich gelagert ist, hat den Vorteil, daß sich das Koppelglied stets radial zu der Mittenachse des Meßgliedes und nach der Kraftangriffsrichtung ausrichten kann.

Durch Einführen einer entsprechend geformten Anlaufscheibe kann die Krafteinleitung bei seitlichen Lasten zwischen Aufnahmeteil und einer Flanke des Biegekörpers besonders günstig gestaltet werden. Die Anlaufscheibe kann vorteilhaft auch in das Aufnahmeteil integriert werden, so daß dieses selbst die an den Biegekörper angepaßte Kontur aufweist.

Zur weiteren Funktionsverbesserung wird die Erfindung dahingehend weitergebildet, daß anstelle des oben beschriebenen, zylindrischen Krafteinleitungsteiles der Biegekörper hier kugelförmig ausgebildet ist, wobei das Aufnahmeteil entfallen kann. Hierdurch wird erreicht, daß der Krafteinleitungspunkt axial genau festliegt und nicht wandern kann, da er immer durch den Kugelmittelpunkt gegeben ist.

Zur Vereinfachung der Montage des Koppelgliedes am Biegekörper läßt sich in zweckmäßiger Weise zwischen der Kugelfläche des Biegekörpers und dem Koppelglied ein zweiteiliger Außenring symmetrisch zur Kugelachse anordnen, dessen innere Fläche sich der Kugeloberfläche anpaßt und dessen äußere Fläche mit dem Koppelglied in Verbindung steht. Der zweiteilige Außenring ist über Sicherungs-und/oder Sprengringe in einer Bohrung des Koppelgliedes festlegbar.

Weitere, besonders vorteilhafte Ausgestaltungen der Erfindung beziehen sich auf die Ausbildung des Geber- und Nehmerelementes. Demgemäß ist das Geberelement ein Magnet, dessen Pole senkrecht zur axialen Ausrichtung des Meßstabes ausgericht sind. Das Nehmerelement ist ein Hallsensor, der so ausgerichtet ist, daß er die längs der Meßstabachse verlaufende Magnetfeldkomponenten erfaßt. Es handelt sich hierbei um eine sehr einfache und kostengünstige Ausführung, da Magnete, insbesondere Permanentmagnete, und Hallsensoren billige Massenware darstellen.

Die spezielle Ausbildung des Magneten und des Hallsensors ermöglicht es, anhand des Hallsensorsignals festzustellen, Ob am Kraftsensor eine Zug- oder Druckkraft anliegt. Wird der Hallsensor in einer mittleren Lage zwischen den Polen des Magneten angeordnet, so zeigt die Polarität des Hallsignals die Kraftrichtung unmittelbar an.

Vorzugsweise wird als Magnet ein quaderförmiger Permanentmagnet verwendet, dessen Länge in polarisierter Richtung größer ist als die in Meßstabachse verlaufende Poldicke. Ein solcher Magnet erzeugt von Pol zu Pol verlaufende Feldstärkebänder mit in relativ weiten Grenzen quer zur Polarisierungsrichtung des Magneten in etwa gleichbleibender Feldstärke. Dies führt dazu, daß eine Bewegung des Meßstabes in Richtung quer zu der Nord-Südrichtung des Magneten keine wesentliche Feldstärkeänderung an der Stelle des Hallsensors zur Folge hat. Daher liefert eine derartige Anordnung nur dann ein Meßsignal, wenn die Krafteinwirkung auf den Kraftsensor in einer Ebene liegt, die durch die Richtung der beiden Pole und die Meßstabachse aufgespannt wird. Diese selektive Kraftsignalauswertung ist insbesondere, wie bereits dargelegt wurde, bei Kraftsensoren vorteilhaft, die bei Ackerschleppern zur Aufnahme von Koppelgliedern für die Bodenbearbeitungsgeräte bestimmt sind.

Es ist von Vorteil, die selektive Wirkung eines Biegekörpers mit unterschiedlicher Biegesteifigkeit in zwei unterschiedliche radiale Richtungen und die selektive Wirkung der beschriebenen Anordnung von Magnet und Hallsensor im gleichen Sinne auszunützen, so daß sich beide Wirkungen unterstützen und die Selektivität verstärken.

Anhand der Zeichnung, die Ausführungsbeispiele der Erfindung zeigt, sollen die Erfindung sowie weitere Vorteile und vorteilhafte Ausgestaltungen der Erfindung erläutert und näher beschrieben werden.

Es zeigt:
- Fig. 1: ein Zuggerät mit einem Kraftsensor,
- Fig. 2: einen Biegekörper in perspektivischer Darstellung,
- Fig. 3 und 4: jeweils den Bereich der Krafteinleitung eines Biegekörpers gemäß Fig. 2 in schematischer Darstellung,
- Fig. 5: einen weiteren Biegekörper in perspektivischer Darstellung,
- Fig. 6: die Schnittzeichnung eines Kraftsensors,
- Fig. 7: ein Diagramm der Krümmung des Biegekörpers längs seiner Achse,
- Fig. 8 und 9: einen Permanentmagneten mit Feldlinienverlauf und Hallsensor.

Im folgenden sind gleiche oder sich entsprechende Bauteile mit denselben Bezugszeichen belegt.

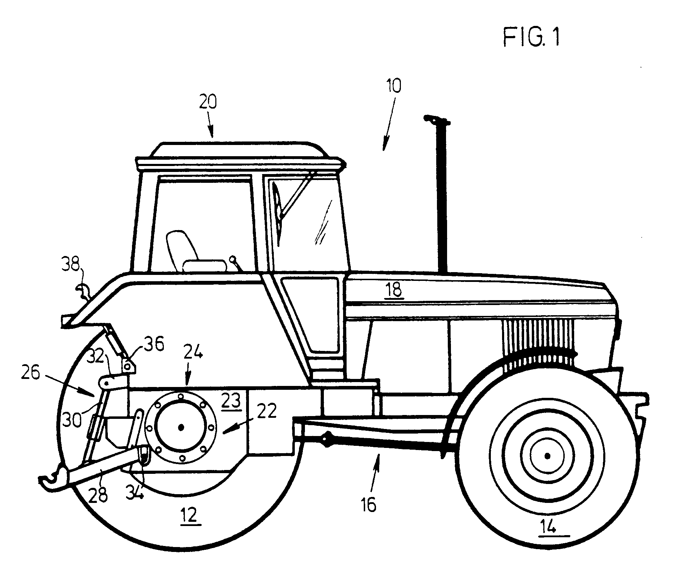

Ein in Fig. 1 gezeichnetes Zuggerät 10 in der Form eines Ackerschleppers trägt auf einem auf hinteren und vorderen Rädern 12 und 14 abgestützten Chassis 16 im wesentlichen einen Motorteil 18 und eine Kabine 20. Hinter dem Motorteil 18 und unterhalb der Kabine 20 schließt sich ein Gehäuse 22 für ein Getriebe an, das Achstrichter 24 trägt, in denen die hinteren Räder 12 drehbar gelagert sind. An das von Gehäusewänden 23 umgebene Gehäuse 22 ist eine Gerätekupplung 26 für einen Dreipunktanbau montiert. Diese besteht unter anderem aus Koppelgliedern 28 in der Form von unteren Lenkern, jeweils einer diesen zugeordneten Hubstrebe 30 und jeweils einem Hubarm 32, der auf einer nicht gezeichneten Hubwelle befestigt ist, wobei die Hubstreben 30 gelenkig mit den Koppelgliedern 28 und den Hubarmen 32 verbunden sind. Jedes Koppelglied 28 greift an einem erfindungsgemäßen Kraftsensor 34 an, der in oder an dem Gehäuse 22 in dessen hinteren, unteren Bereich quer zur Fahrtrichtung befestigt ist. Die Gerätekupplung 26 ist spiegelbildlich zur vertikalen Längsmittelebene des Zuggerätes 10 angeordnet, weshalb sich die Beschreibung nur mit der in Vorwärtsfahrtrichtung rechts der vertikalen Längsmittelebene gelegenen Seite befaßt; für die links gelegene Seite gilt die Beschreibung analog.

In dem Bereich der Hubwelle, also im oberen hinteren Bereich des Gehäuses 22, ist eine Halterung 36 für einen ebenfalls als Koppelglied dienenden oberen Lenker 38 vorgesehen, der an einen Turm eines nicht dargestellten anzubauenden Gerätes ankuppelbar ist. Die Halterung 36 ist starr angebaut, und da die Koppelglieder 28 auf die Kraftsensoren 34, von denen ein Regelungsvorgang ausgeht, aufgesetzt sind, handelt es sich hierbei um eine sogenannte Unterlenkerregelung. Es sei bemerkt, daß ein Kraftsensor auch im Zusammenhang mit dem oberen Lenker 38 verwendet werden kann, um die im oberen Lenker 38 auftretenden Kräfte zu messen und gegebenenfalls zur Steuerung oder Regelung heranzuziehen.

Bei einer Unterlenkerregelung werden die Kraftsensoren 34 endseitig von Zugkräften beansprucht, die sich aus dem Arbeitswiderstand des angebauten oder angehängten Gerätes ergeben und die von den einenends an dem Gerät und anderenends an den Kraftsensoren 34 angreifenden Koppelgliedern 28 übertragen werden. Der obere Lenker 38 dient dabei als Gegenhalter, um ungewollte heckseitige Höhenbewegungen des Gerätes zu vermeiden. Diese Zugkräfte wirken als Biegekräfte um die Außenkante der Gehäusewand 23 des Gehäuses 22 und führen dazu, daß sich jeder Kraftsensor 34 mehr oder weniger krümmt, wobei sein Ausschlag im direkten Verhältnis zur vom Koppelglied 28 übertragenen Kraft steht.

Die Kraftsensoren 34 sind in dem Gehäuse 22 an einen nicht gezeigten Regelkreis mit einem Ventil angeschlossen, über welches ein Hydraulikzylinder zum Auf- und Abbewegen der Koppelglieder 28 um die Kraftsensorachsen 40 mit Druckflüssigkeit beaufschlagt wird. Die Regelung ist dabei so getroffen, daß bei größer werdendem Zugwiderstand das angekuppelte Gerät angehoben, und daß es bei kleiner werdendem Zugwiderstand abgesenkt wird.

Die Anwendung in diesem Ausführungsbeispiel bei einem Akkerschlepper ist nur eine unter vielen Anwendungsmöglichkeiten, denn ein derartiger Kraftsensor 34 kann überall dort eingebaut werden, wo Kräfte ein Biegemoment erzeugen, das zur Bildung eines Regelsignals verwendet wird, so z. B. in Hebezeugen, in Baumaschinen, in Werkzeugmaschinen und Spannverbindungen.

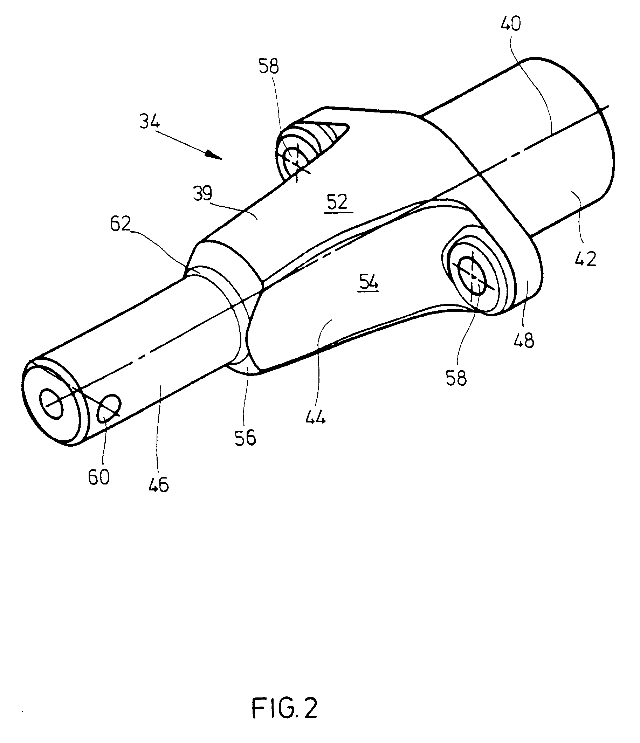

Der in Figur 2 wiedergegebene Kraftsensor 34 erstreckt sich zylindrisch zu einer Mittenachse 40 und weist einen Biegekörper 39 mit drei Abschnitten auf, und zwar einen Paßteil 42, einen Biegeteil 44 und einen Krafteinleitungsteil 46, die gemeinsam einen einzigen Teil aus hochwertigem Stahl bilden.

Der Paßteil 42, oder auch Schaft genannt, ist zylindrisch ausgebildet, setzt sich gegenüber dem Biegeteil 44 durch einen Flansch 48 ab und wird in eine nicht näher dargestellte Bohrung in einer Gehäusewand, beispielsweise der eines Ackerschleppers, eingesetzt.

Der Biegeteil 44 ist im wesentlichen als rechteckiges Profil mit sich stetig veränderndem Querschnitt ausgebildet und weist eine schmale Seite 52 und eine breite Seite 54 auf, denen jeweils eine gleich große Seite gegenüberliegt. Im Querschnitt sind die schmalen Seiten 52 gewölbt ausgebildet. Sie laufen in Längsrichtung des Biegekörpers 39 konisch zusammen, so daß die schmalen Seiten 52 den Ausschnitt eines Kegelmantels dargestellen. Die beiden breiten Seiten 54 sind im Querschnitt gerade und parallel zu einander ausgebildet. Ihr Abstand nimmt von der Seite der Krafteinleitung zur Einspannseite stetig zu, wobei die Zunahme progressiv erfolgt.

Die Seiten 52, 54 enden einenends in dem Flansch 48 und anderenends in einer Schulter 56, wobei die Außenabmessungen des Flansches 48 weitaus größer sind, als die der Schulter 56. Durch den Flansch 48 erstrecken sich mehrere Löcher 58, durch die nicht gezeigte Schrauben zur Befestigung des Kraftsensors 34 an der Gehäusewand gesteckt werden können.

Der Krafteinleitungsteil 46 ist zylindrisch ausgebildet und weist an seinem freien Ende eine Querbohrung 60 auf, die der Befestigung einer nicht dargestellten Hülse mittels eines Stiftes dient.

Um Kerbwirkungen zu vermeiden, die eine robustere Ausbildung des Biegekörpers 39 erforderlich machen würden, sind die Übergänge zwischen unterschiedlichen Profilen mit Fasen mit weichen Ausrunden ausgeführt. Eine derartige Fase wird durch die Schulter 56 gebildet und ist insbesondere zwischen dem Biegeteil 44 und dem Krafteinleitungsteil 46 erkennbar. Ihr Winkel gegen die Achse 40 beträgt 45 Grad. Die Fase 56 geht über eine Ausrundung 62 weich in das Krafteinleitungsteil 46 über.

Die Krafteinleitung erfolgt im mittleren Bereich des Krafteinleitungsteils 46, die Richtung der Kraft verläuft gewöhnerlicherweise parallel zur Bohrung 60. In dieser Richtung läßt sich der Biegekörper 39 infolge seines stark abgeflachten Biegeteils 44 wesentlich leichter verbiegen als in einer senkrecht hierzu liegenden Richtung. Dies führt dazu, daß der Kraftsensor 34 stark selektiv wirkt, d. h. im wesentlichen nur auf solche Kraftkomponenten anspricht, die in der durch die Bohrung 60 und die beiden Bohrungen 58 aufgespannten Ebene liegen. Kraftkomponenten, die senkrecht zu dieser Ebene ausgerichtet sind, werden durch den Kraftsensor 34 nicht in Meßsignale umgewandelt.

In Figur 7 ist die Änderung des Biegewinkels (Krümmung) eines Biegekörpers 39 gemäß Figur 2 über die axiale Erstreckung des Biegekörpers (Hebelarm) dargestellt. Dabei wird davon ausgegangen, daß eine Verbiegung innerhalb der im vorigen Abschnitt bezeichneten Ebene erfolgt. In Figur 7 ist die Krümmung eines geraden, sich zwischen Krafteinleitung und Einspannstelle erstreckenden Rohres mit der Krümmung eines Biegekörpers gemäß Figur 2 gegenübergestellt.

Die Krümmung des geraden Rohres nimmt linear mit dem Abstand des Krafteinleitungspunktes zu, da sie sich als Funktion aus Kraft x Hebelarm darstellen läßt.

Ein linearer Zusammenhang ist auch im ersten Bereich (Übergangsbereich) der Biegekörperkurve bis etwa 20% der Hebelarmlänge erkennbar. Dieser Bereich stellt den axialen Abschnitt des Krafteinleitungsteils 46 des Biegekörpers 39 dar. Die Steigung ist wesentlich größer als die des geraden Rohres, da der Krafteinleitungsteil 46 mit einem relativ geringen Durchmesser ausgestattet werden kann. Bei der Auslegung der Querschnitte ist darauf zu achten, daß die maximal mögliche Krümmung, die sich aus dem verwendeten Werkstoff errechnen läßt, nicht überschritten wird. Dieser Wert liegt in dem in Figur 7 dargestellten Beispiel knapp unterhalb 0,6%.

Bei einer Hebelarmlänge zwischen ca. 20% und 25% schwächt sich der Anstieg der Krümmungskurve des Biegekörpers 39 ab und geht schließlich in ein Plateau über, das ca. zwischen 25% und 50% der Hebelarmlänge liegt. Der Bereich zwischen Kurvenanstieg und Plateau entspricht etwa dem Bereich der Ausrundung 62 und Fase 56 des Biegekörpers 39.

Der Querschnitt des Biegeteils 44 des Biegekörpers 39 nimmt von der Ausrundung 62 ausgehend bis zum Flansch 48 (Einspannstelle) stetig zu. Er ist derart gestaltet, daß er einen sich an die Ausrundung 62 anschließenden Bereich maximaler Krümmung aufweist. Von einer Hebelarmlänge von ca. 50% ausgehend nimmt dann die Krümmung kontinuierlich ab, so daß sie an der Einspannstelle nur noch einen relativ geringen Wert einnimmt.

Dies bedeutet, daß gegenüber einem geraden Rohr der Schwerpunkt der Krümmung eines erfindungsgemäßen Biegekörpers 39 sich wesentlich zur Stelle der Krafteinleitung verschiebt, so daß die Neigung des Biegekörpers an der Stelle der Krafteinleitung bedeutend größer ist als die eines geraden Rohres.

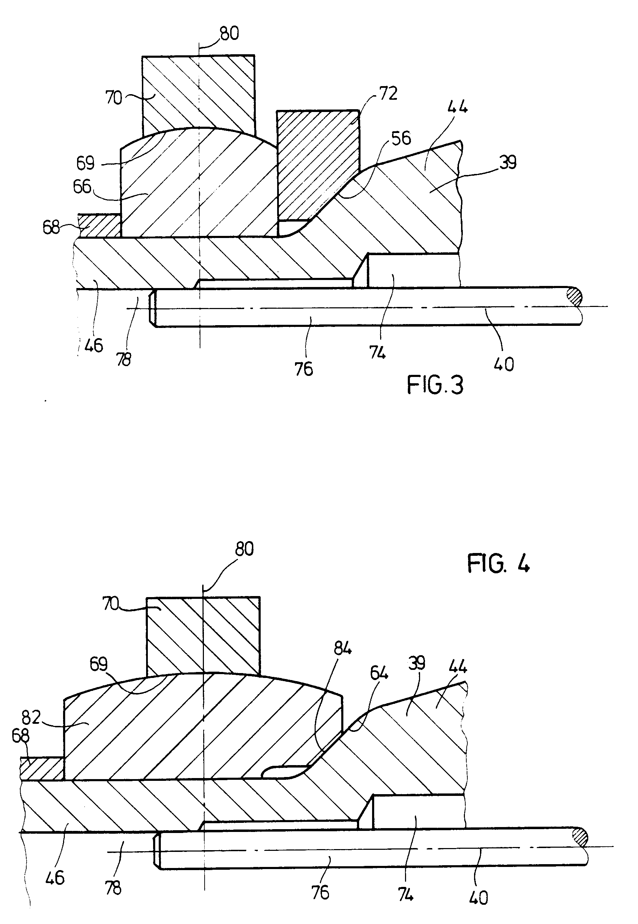

Figur 3 zeigt in einem schematischen Teilschnitt den Teil des Biegekörpers 39, in dem die Krafteinleitung erfolgt. Der Krafteinleitungsteil 46 ist, wie in Figur 2 dargestellt, auch hier zylinderförmig ausgebildet. Er geht über eine Flanke oder Fase 64 in das Biegeteil 44 über. Der zylindrische Teil 46 nimmt ein um die Biegekörperachse 40 verdrehbares Aufnahmeteil 66 auf, welches seinerseits durch eine Hülse 68 an einer axialen Verschiebung gehindert wird. Das Aufnahmeteil 66 trägt eine äußere, sphärische Oberfläche 69, auf der ein der Krafteinleitung dienendes Koppelglied 70 schwenkbar gelagert ist. Das Koppelglied 70 ist beispielsweise ein Unterlenker eines Ackerschleppers. Zwischen dem Aufnahmeteil 66 und der Fase 64 ist eine Anlaufscheibe 72 angeordnet, welche sich den jeweiligen Konturen des Aufnahmeteils 66 und der Fase 64 anpaßt. Die Anlaufscheibe nimmt axiale Kräfte auf, die dann auftreten, wenn die Krafteinleitung nicht senkrecht zur Achse 40 erfolgt.

In der axialen Ausnehmung 74 des Biegekörpers 39 befindet sich ein Meßstab 76, welcher in einer bezüglich Figur 3 linksseitigen Bohrungen 78 geführt ist. Der Meßstab 76 ist durch Preßsitz in der Bohrung 78 festgehalten. Er kann beispielsweise auch eingeklebt sein. Im Schnittpunkt der Krafteinleitungsstelle 80 und der Achse 40 erweitert sich die Bohrung 78 zur axialen Ausnehmung 74. Von dieser Stelle ab ist der Meßstab 76 freitragend.

Figur 4 stellt eine ähnliche Ausführung wie Figur 3 dar. Hier sind jedoch das Aufnahmeteil 66 und die Anlaufscheibe 72 gemäß Figur 3 zu einem gemeinsamen Teil 82 zusammengefaßt. Es weist eine Anlauffläche 84 auf, die sich an der Fase 64 abstützt.

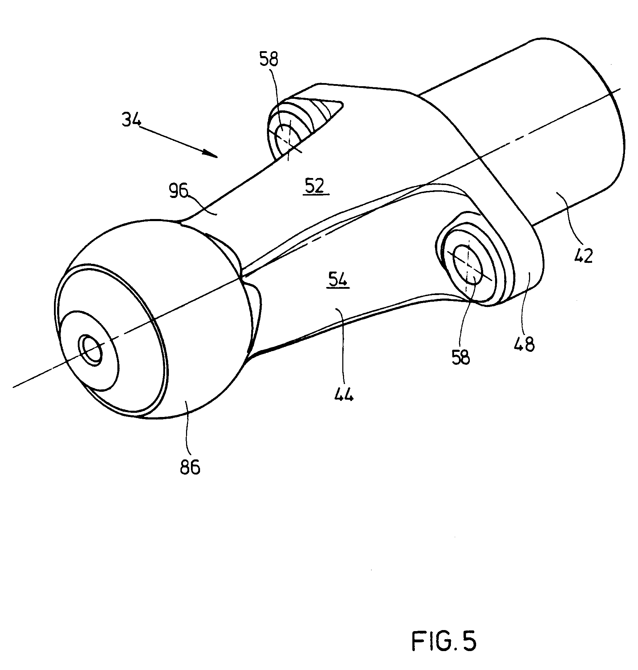

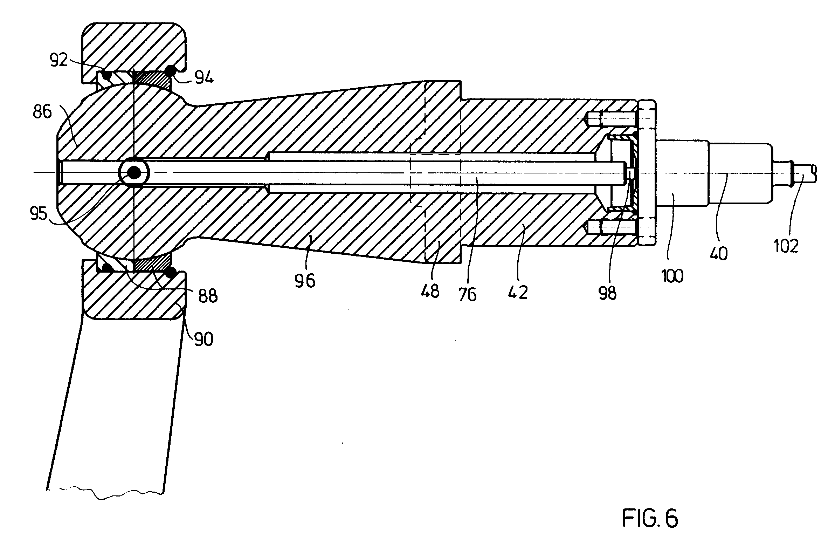

Eine weitere Ausführungsform der Erfindung ist in den Figuren 5 und 6 dargestellt. Im Unterschied zu der anhand der Figuren 2, 3 und 4 beschriebenen Ausführungsform ist hier der Krafteinleitungsteil des Biegekörpers nicht zylinderförmig, sondern in Form eines Kugelkörpers 86 ausgebildet. Der Kugelmittelpunkt fällt mit dem Krafteinleitungespunkt zusammen. Der Kugelkörper nimmt eine zweiteilig ausgebildete Lagerschale 88 auf, welche ihrerseits ein der Krafteinleitung dienendes Koppelglied 90 trägt. Auch bei diesem Koppelglied 90 kann es sich um einen Unterlenker eines Ackerschleppers handeln. Die zweiteilige Ausbildung der Lagerschale 88 ermöglicht die einfache Montage. Die Lagerschalenhälften werden durch einen Sprengring 92 zusammengehalten und sind durch einen Sicherungsring 94 am Koppelglied 90 axial befestigt.

In Figur 6 ist der axial ausgerichtete Meßstab 76 in voller Länge dargestellt. Dieser ist bis zur Linie der Krafteinleitung, als Pfeilspitze 95 in Fig. 6 gekennzeichnet, im Biegekörper 96 eingespannt. Das freie Ende des Meßstabes 76 trägt einen Permanentmagneten 98, der als Geberelement dient. An der Stirnseite des Paßteiles 42 des Biegekörpers 96 ist das Gehäuse 100 eines Hallsensors angeflanscht. Der Hallsensor dient als Nehmerelement und ist so positioniert, daß er in der Achse 40 des Biegekörpers 96 liegt und bei einer Auslenkung des Meßstabes 76 anspricht. Die Auslenkung des in Figur 6 dargestellten Meßstabes erfolgt senkrecht zur Zeichenebene, welche die Ebene der Krafteinleitung ist. Der Hallsensor ist über Meßleitungen 102 mit einer nicht dargestellten Steuer-bzw. Regeleinrichtung verbunden.

Der Magnet ist so ausgericht, daß dessen Polarisierungsrichtung in der gewünschten horizontalen, biegeweichen Lastebene liegt. Seine Pole liegen auf einer Achse quer zur Meßstabachse 40 in der Ebene geringster Biegesteifigkeit des Kraftsensors 96. Gemäß Figur 6 liegt somit ein Pol oberhalb und der andere Pol unterhalb der Papierebene. Der Hallsensor ist so ausgerichtet, daß er auf Magnetfeldkomponenten anspricht, die in Richtung der Meßstabachse 40 verlaufen.

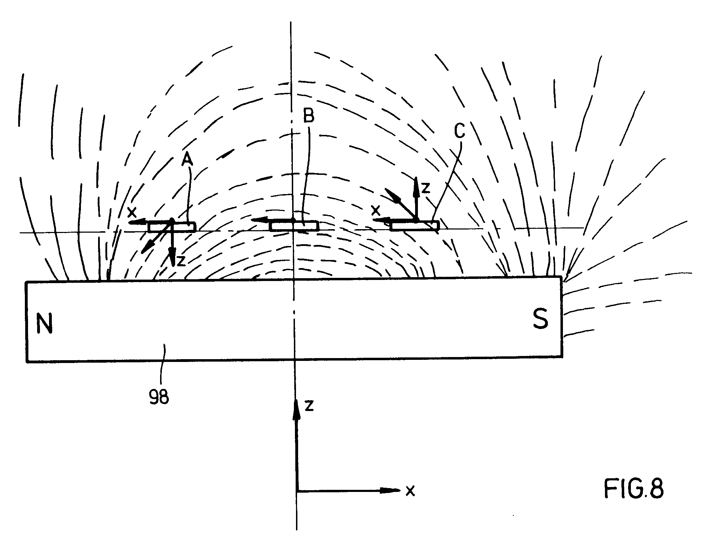

Figur 8 zeigt den Permanentmagneten 98 mit einem Nordpol N und einem Südpol S. Auf der dem nicht dargestellten Meßstab gegenüberliegenden Seite des Permanentmagneten 98 ist der Magnetfeldlinienverlauf durch gestrichelte Linien angedeutet. Die Feldlinien treten aus dem Südpol S aus und verlaufen auf gekrümmten Linien zum Nordpol N hin. Im mittleren Bereich zwischen den Polen sind die Feldlinien parallel zur Längserstreckung des Magneten 98 ausgericht. Die Koordinaten x und z geben die Lage des Permanentmagneten 98 an. z ist die Richtung der Meßstabachse 40 und x ist die Richtung geringster Biegesteifigkeit des Kraftsensors 96.

In Figur 8 ist ferner ein Hallsensor angedeutet, der die drei Positionen A, B und C einnimmt. Der Hallsensor spricht auf Magnetfeldkomponenten an, die in z-Richtung liegen. Wenn keine Kraft auf den Kraftsensor einwirkt, befindet sich der Hallsensor relativ zum Magneten 98 in der mittleren Position B. In dieser Position B liegt keine in z-Richtung weisende Magnetfeldkomponente vor, da hier die Magnetfeldlinien parallel zur Magnetoberfläche, also in x-Richtung verlaufen. Der Hallsensor gibt daher kein Spannungssignal ab.

Nimmt der Hallsensor jedoch infolge einer in x-Richtung auf den Kraftsensor 96 wirkenden Kraft eine neue, außerhalb der mittleren Position B liegende Position A oder C ein, so befindet er sich in einem Feldlinienbereich, der eine z-Komponente aufweist, wobei die Richtung dieser Feldkomponente davon abhängt, Ob der Hallsensor näher beim Nordpol N oder beim Südpol S liegt. Die Hallsensorspannung ist entsprechend positiv oder negativ. Somit zeigt die Polarität der Hallsensorspannung an, in welche Richtung eine Auslenkung des Kraftsensors 96 erfolgt.

Ein Vorteil der beschriebenen Anordnung von Magnet und Hallsensor ergibt sich ferner dadurch, daß in der Nähe der mittleren Position B zwischen der z-Komponenten der Magnetfeldstärke und dem x-Abstand des Hallsensors von der mittleren Position B ein in etwa proportionaler Zusammenhang besteht. Dies erleichtert die Kalibrierung des Kraftsensors erheblich.

Allerdings ist es auch möglich, gezielt den linearen Bereich durch Verkürzen der Magnetlänge einzuengen. Im Bereich der Pole ist eine mit der Auslenkung x stark progressiv ansteigende Feldliniendichte zu verzeichnen, mit entsprechend progressiver Zunahme der Hallspannung. So wäre es denkbar, daß gezielt bei der Überschreitung einer bestimmten Krafthöhe der Sensor gewollt empfindlicher gemacht wird, um eine schnellere oder deutlichere Reaktion der Regelhydraulik für eine Hubarmsteuerung zu erreichen.

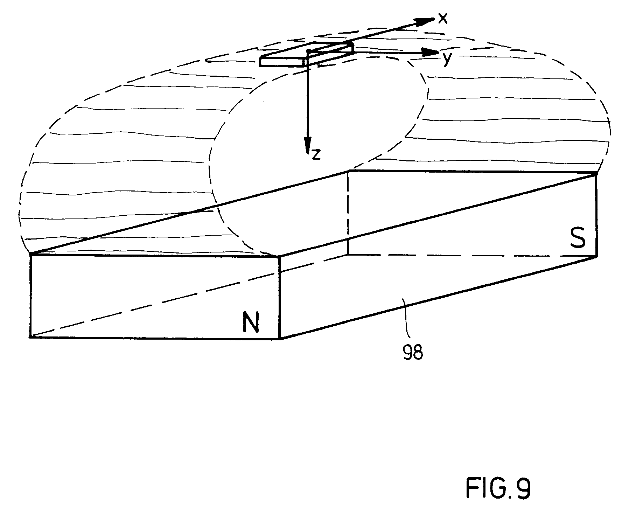

Figur 9 zeigt einen der Figur 8 entsprechenden Permanentmagneten 98 in perspektivischer Darstellung. Auch hier verläuft die z-Achse in Richtung der Meßstabachse 40 und die x-Achse in Richtung der geringsten Biegesteifigkeit des Kraftsensors 96. Die y-Achse verläuft senkrecht zu der x- und der z-Achse. Der Permanentmagnet 98 ist quaderförmig ausgebildet und in x-Richtung polarisiert.

Oberhalb des Magneten 98 ist in Figur 9 ein Feldlinienband dargestellt, das etwa die Breite des Magneten aufweist. Diese Darstellung soll verdeutlichen, daß bei Verschiebung in y-Richtung keine wesentliche Feldstärkeänderung eintritt.

Damit ändert sich bei Verschiebung in y-Richtung auch nicht die vom Hallsensor erfaßte z-Komponente der Magnetfeldstärke. Durch eine breite Ausbildung des Permanentmagneten 98 kann daher die Richtungsselektivität des Kraftsensors hinsichtlich seiner Empfindlichkeit weiter gesteigert werden.

## Patentansprüche

1. Kraftsensor zur Bestimmung von Zug- und Druckkräften mit einem hohlen, auf Biegung beanspruchbaren Biegekörper (39, 96), dessen erster Endbereich festlegbar ist und in dessen zweiten, freien Endbereich (46, 86) senkrecht zur Längsachse des Biegekörpers die zu bestimmende Kraft einleitbar ist, und mit einem mit dem Biegekörper in dessen zweiten Endbereich starr verbundenen, sich frei im Inneren des Biegekörpers erstreckenden Meßstabes (76), der an seinem freien Ende wenigstens ein Geberelement (98) trägt, welchem wenigstens ein ortsfest angeordnetes Nehmerelement gegenüberliegt, dadurch gekennzeichnet, daß der Biegekörper (39, 96) so ausgelegt ist, daß seine Biegesteifigkeit in seinem Bereich der Krafteinleitung relativ gering ist und zur Seite des festgelegten Bereiches hin zunimmt.

2. Kraftsensor nach Anspruch 1, dadurch gekennzeichnet, daß der Meßstab (76) an der Krafteinleitstelle eingespannt ist.

3. Kraftsensor nach Anspruch 1 oder 2, dadurch gekennzeichnet, daß der Querschnitt des Biegekörpers (39, 96) vom Bereich der Krafteinleitung zum Bereich der Festlegung zunimmt.

4. Kraftsensor nach einem der Ansprüche 1 bis 3, dadurch gekennzeichnet, daß der Biegekörper (39, 96) in seinem mittleren Bereich ein Profil mit zwei Vorzugsrichtungen mit unterschiedlicher Dicke des Biegekörpers (39, 96) aufweist.

5. Kraftsensor nach einem der Ansprüche 1 bis 4, dadurch gekennzeichnet, daß wenigstens im auf Biegung beanspruchten Bereich des Biegekörpers alle Übergänge zwischen unterschiedlichen Profilen mit Übergängen mit weicher Ausrundung ausgebildet sind.

6. Kraftsensor nach einem der Ansprüche 1 bis 5, dadurch gekennzeichnet, daß der festlegbare Endbereich des Biegekörpers einen sich quer zur Biegekörperachse (40) erstreckenden Flansch (48) trägt.

7. Kraftsensor nach Anspruch 6, dadurch gekennzeichnet, daß der Biegekörper (39, 96) jenseits des Flansches (48) einen Schaft (42) trägt, welcher Befestigungsmittel (100) zur Aufnahme des Nehmerelementes enthält.

8. Kraftsensor nach einem der Ansprüche 1 bis 7, dadurch gekennzeichnet, daß der Biegekörper (39) im Bereich der Krafteinleitung (80) zylindrisch ausgebildet ist, und daß die Zylinderfläche ein um die Biegekörperachse (40) verdrehbares Aufnahmeteil (66) mit sphärischer Oberfläche (69) aufnimmt, auf dem ein der Krafteinleitung dienendes Koppelglied (70) schwenkbar gelagert ist.

9. Kraftsensor nach Anspruch 8, dadurch gekennzeichnet, daß zwischen Aufnahmeteil (66) und einer Flanke (56) im mittleren Bereich des Biegekörpers (39) eine Anlaufscheibe (72) angeordnet ist, die den Konturen des Aufnahmeteiles (66) und der Flanke (64) des Biegekörpers (39) angepaßt ist.

10. Kraftsensor nach Anspruch 8, dadurch gekennzeichnet, daß das Aufnahmeteil (66) eine zum mittleren Bereich des Biegekörpers (39) weisende Anlauffläche (84) aufweist, die der Kontur (64) des Biegekörpers (39) angepaßt ist.

11. Kraftsensor nach einem der Ansprüche 1 bis 7, dadurch gekennzeichnet, daß die Mantelfläche des Biegekörpers (96) einen kugelförmig ausgebildeten Bereich (86) aufweist, wobei der Kugelmittelpunkt mit dem Krafteinleitungspunkt zusammenfällt, und daß auf der Kugelfläche ein der Krafteinleitung dienendes Koppelglied (90) schwenkbar gelagert ist.

12. Kraftsensor nach Anspruch 11, dadurch gekennzeichnet, daß zwischen der Kugelfläche des Biegekörpers (96) und dem Koppelglied (90) ein zweiteiliger Außenring (88) symmetrisch zur Kugelachse angeordnet ist, dessen innere Fläche sich der Kugeloberfläche anpaßt und dessen äußere Fläche mit dem Koppelglied (90) in Verbindung steht.

13. Kraftsensor nach Anspruch 12, dadurch gekennzeichnet, daß der zweiteilige Außenring (88) über Sicherungs-und/oder Spannringe (92, 94) in einer Bohrung des Koppelgliedes (90) festlegbar ist.

14. Kraftsensor nach einem der Ansprüche 1 bis 13, dadurch gekennzeichnet, daß das Geberelement ein Magnet (98) ist, dessen Pole senkrecht zur axialen Ausrichtung des Meßstabes (76) ausgerichtet sind, und daß als Nehmerelement ein Hallsensor dient, der so ausgerichtet ist, daß er auf die längs der Meßstabachse (40) verlaufenden Magnetfeldlinien des Magneten (98) anspricht.

15. Kraftsensor nach Anspruch 14, dadurch gekennzeichnet, daß der Hallsensor in einer mittleren Lage zwischen den Polen des Magneten (98) angeordnet ist, in der bei unbelastetem Kraftsensor (96) das Magnetfeld lediglich eine quer zur Meßstabachse (40) verlaufende Komponente aufweist.

16. Kraftsensor nach Anspruch 14 oder 15, dadurch gekennzeichnet, daß der Magnet derart ausgebildet ist, daß die sich zwischen Nordpol N und Südpol S ausbildende Feldstärke für einen in der Nähe der Meßstabachse (40) liegenden Bereich bei Verschiebung in einer Richtung (y), die quer zur Meßstabachse (40) und quer zur Nord-Südrichtung (x) verläuft, in etwa konstant ist.

17. Kraftsensor nach einem der Ansprüche 14 bis 16, dadurch gekennzeichnet, daß bei einem Biegekörper mit zwei senkrecht zueinander liegenden, quer zur Meßstabachse (40) verlaufenden Richtungen mit unterschiedlichen Biegesteifigkeiten die Richtung geringerer Biegesteifigkeit mit der Polausrichtung des Magneten zusammenfällt.

## Claims

1. A force transducer for measuring forces in tension and compression, with a hollow flexural body (39, 96) responsive to bending, whose first end region can he fixed while the force to be detected can he introduced into its second, free end region (46, 86) perpendicular to the longitudinal axis of the flexural body, and with a measuring rod (76) rigidly connected to the flexural body in its second end region, extending freely into the interior of the flexural body, the measuring rod carrying at least one pick-off element (98) at its free end, opposite at least one positionally fixed sensor element, characterized in that the flexural body (39, 96) is so designed that its bending stiffness in its region of introduction of the force is relatively small and increases towards the side of the fixed region.

2. A force transducer according to claim 1, characterized in that the measuring rod (76) is gripped at the point of introduction of the force.

3. A force transducer according to claim 1 or 2, characterized in that the cross-section of the flexural body (39, 96) increases from the region of introduction of the force to the fixing region.

4. A force transducer according to any one of claims 1 to 3, characterized in that the flexural body (39, 96) has a profile in its middle region with two preferred directions with different thicknesses of the flexural body (39, 96).

5. A force transducer according to any one of claims 1 to 4, characterized in that at least all transitions between different profiles are formed by gently rounded transitions, at least in the region of the flexural body stressed by bending.

6. A force transducer according to any one of claims 1 to 5, characterized in that the fixing end region of the flexural body carries a flange (48) extending transverse to the flexural body axis (40).

7. A force transducer according to claim 6, characterized in that the flexural body (39, 96) has a shank (42) on the other side of the flange (48) which includes fixing means (100) for receiving the sensor element.

8. A force transducer according to any one of claims 1 to 7, characterized in that the flexural body (39) is cylindrically formed in the region of the introduction of the force (80) and in that the cylindrical surface receives a receptor part (66) with a spherical surface (69), which is rotatable about the axis (40) of the flexural body, on which part a coupling member (70) serving to introduce the force is pivotally mounted.

9. A force transducer according to claim 8, characterized in that a hearing washer (72) is arranged between the receptor part (66) and a flank (56) in the middle region of the flexural body (39) and is matched to the contours of the receptor part (66) id the flank (64) [56] of the flexural body (39).

10. A force transducer according to claim 8, characterized in that the receptor part (66) has a bearing surface (84) facing the middle region of the flexural body (39) and which is matched to the contour (64) of the flexural body (39).

11. A force transducer according to any one of claims 1 to 7, characterized in that the peripheral surface of the flexural body (96) has a spherically formed region (86), the centre of the sphere coinciding with the point of introduction of the force, and in that a coupling member (90) serving to introduce the force is pivotally mounted on the spherical surface.

12. A force transducer according to claim 11, characterized in that a two-part outer ring (88) is arranged symmetrically relative to the axis of the sphere between the spherical surface of the flexural body (96) and the coupling member (90), the inner surface of which ring is matched to the spherical surface while the outer surface is connected to the coupling member (90).

13. A force transducer according to claim 12, characterized in that the two-part outer ring (88) can be fixed by safety rings and/or circlips in a bore of the coupling member (90).

14. A force transducer according to any one of claims 1 to 13, characterized in that the pick-off element is a magnet (98) whose poles are aligned perpendicular to the axial direction of the measuring rod (76), and in that a Hall sensor serves as the sensor element and is so aligned that is responds to the magnetic field lines of the magnet (98) running along the measuring rod axis (40).

15. A force transducer according to claim 14, characterized in that the Hall sensor is arranged in a central position between the poles of the magnet (98), in which the magnetic field merely has a component running transverse to the measuring rod axis (40) with the force transducer not under load.

16. A force transducer according to claim 14 or 15, characterized in that the magnet is so formed that the field strength developed between north pole N and south pole S for a region lying in the vicinity of the measuring rod axis (40) is approximately constant with displacement in a direction (y) which is transverse to the measuring rod axis (40) and transverse to the north-south direction (x).

17. A force transducer according to any one of claims 14 to 16, characterized in that, with a flexural body with two directions lying perpendicular to one another, runing transverse to the measuring rod axis (40), with different flexural stiffnesses, the direction of smaller flexural stiffness coincides with the pole direction of the magnet.

## Revendications

1. Capteur de force pour mesurer des forces de traction et de compression, avec un corps de flexion creux (39, 96), qui peut être sollicité en flexion et dont la première région terminale peut être fixée, tandis que la force à mesurer peut être introduite dans la seconde région terminale, libre (46, 86) du corps de flexion, perpendiculairement à l'axe longitudinal de ce corps, et avec une barre de mesure (76), qui est assemblée rigidement au corps de flexion dans la seconde région terminale de ce dernier, qui s'étend librement à l'intérieur du corps de flexion et qui porte à son extrémité libre au moins un élément transmetteur (98), auquel fait face au moins un élément récepteur fixement disposé, **caractérisé** en ce que le corps de flexion (39, 96) est conçu de telle sorte que sa rigidité en flexion est relativement faible dans la région d'introduction de force, et augmente vers la région fixe.

2. Capteur de force selon la revendication 1, **caractérisé** en ce que la barre de mesure (76) est serrée au point d'introduction de force.

3. Capteur de force selon la revendication 1 ou 2, **caractérisé** en ce que la section du corps de flexion (39, 96) augmente depuis la région d'introduction de force vers la région de fixation.

4. Capteur de force selon l'une quelconque des revendications 1 à 3, **caractérisé** en ce que le corps de flexion (39, 96) présente, dans sa région médiane, un profil à deux orientations préférentielles avec des épaisseurs différentes du corps de flexion (39, 96).

5. Capteur de force selon l'une quelconque des revendications 1 à 4, **caractérisé** en ce que, au moins dans la région du corps de flexion qui est sollicitée en flexion, toutes les transitions entre des profils différents sont réalisées avec un léger arrondi.

6. Capteur de force selon l'une quelconque des revendications 1 à 5, **caractérisé** en ce que la région terminale du corps de flexion qui peut être fixée, porte une bride (48) s'étendant transversalement à l'axe (40) du corps de flexion.

7. Capteur de force selon la revendication 6, **caractérisé** en ce que le corps de flexion (39, 96) porte, au-delà de la bride (48), une queue (42) qui contient des éléments de fixation (100) pour recevoir l'élément récepteur.

8. Capteur de force selon l'une quelconque des revendications 1 à 7, **caractérisé** en ce que le corps de flexion (39) est réalisé cylindrique dans la région d'introduction de force (80), et en ce que la face cylindrique loge une pièce réceptrice (66), rotative autour de l'axe (40) du corps de flexion et à surface sphérique (69), sur laquelle est monté à pivotement un organe d'accouplement (70) servant à l'introduction de force.

9. Capteur de force selon la revendication 8, **caractérisé** en ce qu'un disque porteur (72), qui est adapté aux contours de la pièce réceptrice (66) et du flanc (64) du corps de flexion (39), est disposé entre la pièce réceptrice (66) et un flanc (56) dans la région médiane du corps de flexion (39).

10. Capteur de force selon la revendication 8, **caractérisé** en ce que la pièce réceptrice (66) présente une face portante (84), tournée vers la région médiane du corps de flexion (39), qui est adaptée au contour (64) du corps de flexion (39).

11. Capteur de force selon l'une quelconque des revendications 1 à 7, **caractérisé** en ce que la face d'enveloppe du corps de flexion (96) présente une région en forme de boule (86), le centre de la boule coïncidant avec le point d'introduction de force, et en ce qu'un organe d'accouplement (90), servant à l'introduction de force, est monté à pivotement sur la surface de la boule.

12. Capteur de force selon la revendication 11, **caractérisé** en ce qu'une bague extérieure en deux parties (88) est disposée symétriquement à l'axe de la boule entre la surface de la boule du corps de flexion (96) et l'organe d'accouplement (90), bague dont la face intérieure s'adapte à la surface de la boule et dont la face extérieure est assemblée à l'organe d'accouplement (90).

13. Capteur de force selon la revendication 12, **caractérisé** en ce que la bague extérieure en deux parties (88) peut être fixée dans un perçage de l'organe d'accouplement (90) à l'aide de joncs d'arrêt et/ou de joncs élastiques (92, 94).

14. Capteur de force selon l'une quelconque des revendications 1 à 13, **caractérisé** en ce que l'élément transmetteur est un aimant (98) dont les pôles sont orientés perpendiculairement à la direction axiale de la barre de mesure (76), et en ce que l'élément récepteur est un capteur à effet Hall, qui est orienté de telle sorte qu'il réagit aux lignes de champ magnétique de l'aimant (98) qui s'étendent le long de l'axe (40) de la barre de mesure.

15. Capteur de force selon la revendication 14, **caractérisé** en ce que le capteur à effet Hall est disposé dans une position médiane entre les pôles de l'aimant (98), position dans laquelle, lorsque le capteur de force (96) n'est pas sollicité, le champ magnétique présente uniquement une composante s'étendant transversalement à l'axe (40) de la barre de mesure.

16. Capteur de force selon la revendication 14 ou 15, **caractérisé** en ce que l'aimant est configuré de telle sorte que l'intensité de champ qui s'établit entre le pôle nord N et le pôle sud S, pour une région située au voisinage de l'axe (40) de la barre de mesure, est approximativement constante lors d'une translation dans une direction (y) qui s'étend transversalement à l'axe (40) de la barre de mesure et transversalement à la direction nord-sud (x).

17. Capteur de force selon l'une quelconque des revendications 14 à 16, **caractérisé** en ce que, pour un corps de flexion présentant deux orientations mutuellement perpendiculaires, qui s'étendent transversalement à l'axe (40) de la barre de mesure et qui possédent des rigidités en flexion différentes, l'orientation possédant la plus faible rigidité en flexion coïncide avec l'orientation des pôles de l'aimant.
